# EUROPÄISCHE PATENTSCHRIFT

(11) **EP 3 569 061 B1**
(45) Veröffentlichungstag und Bekanntmachung des Hinweises auf die Patenterteilung: **30.06.2021**
(21) Anmeldenummer: 18173090.4
(22) Anmeldetag: 18.05.2018
(51) Int. Cl.: A01J 15/00, A21D 2/16, A21D 13/16, A23C 15/04, A23C 15/06, A23C 15/12, A01J 15/10

(54) **VERFAHREN ZUR HERSTELLUNG EINER INDUSTRIEBUTTER MIT ERHÖHTER HÄRTE**
PROCESS FOR PRODUCING INDUSTRIAL BUTTER WITH INCREASE HARDNESS
PROCÉDÉ DE PRÉPARATION DE BEURRE INDUSTRIELLE AVEC DURETÉ AUGMENTÉE

(43) Veröffentlichungstag der Anmeldung: 20.11.2019
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- WO-A1-2006/011331
- DE-C- 767 269
- JP-A- 2007 060 913
- JP-B2- 5 601 427
- S. RØNHOLT ET AL: "The Effect of Capacity, Rotational Speed and Storage on Crystallization and Rheological Properties of Puff Pastry Butter", JOURNAL OF THE AMERICAN OIL CHEMISTS' SOCIETY (JAOCS), Bd. 91, Nr. 1, 1. Oktober 2013 (2013-10-01), Seiten 29-38, XP055490994, DE ISSN: 0003-021X, DOI: 10.1007/s11746-013-2353-6
- O'CALLAGHAN TOM F ET AL: "Quality characteristics, chemical composition, and sensory properties of butter from cows on pasture versus indoor feeding systems", JOURNAL OF DAIRY SCIENCE, vol. 99, no. 12, December 2016 (2016-12), pages 9441-9460, XP029815596, ISSN: 0022-0302, DOI: 10.3168/JDS.2016-11271
- 6 December 2012 (2012-12-06), PHYSICO-CHEMICAL ASPECTS OF FOOD PROCESSING, SPRINGER SCIENCE AND BUSINESS MEDIA, PAGE(S) 240 - 242, XP002782895,

## Beschreibung

### GEBIET DER ERFINDUNG

Die Erfindung befindet sich auf dem Gebiet der Milchprodukte und betrifft ein Verfahren zur Herstellung von Industriebutter mit erhöhter Härte.

### TECHNOLOGISCHER HINTERGRUND

Zu den beliebtesten Backwaren gehören der Blätterteig und ähnliche Produkte wie etwa Croissants oder Plunder.

Blätterteig (auch *Feuilletage*) ist ein mehrlagiger Ziehteig. In den Grundteig aus Mehl, Salz und Wasser, wird durch mehrfaches Ausrollen und Zusammenschlagen Butter, seltener auch ein anderes Ziehfett wie Margarine, eingearbeitet, was als "Tourieren" bezeichnet wird.

Während des Backens geht der Teig locker und blättrig auf. Durch die Backhitze verdampft das im Teig vorhandene Wasser, dehnt sich dabei aus und hebt das Gebäck an. Die Fettschichten wirken wie eine Sperre, sie lassen den Dampf nicht durch und halten ihn in der Teigschicht, bis das Teiggerüst stabil gebacken ist. Das Aufgehen (die Volumenvergrößerung) des Teiges wird dabei nur durch den im Teig entstehenden Wasserdampf, nicht durch zusätzliche Triebmittel oder Hefe hervorgerufen. Daher wird diese Herstellungsart "physikalische Lockerung" genannt.

Blätterteig ist, abhängig vom Eigengeschmack der verwendeten Fette, weitgehend geschmacksneutral und wird ohne Zuckerzusatz hergestellt. Dadurch eignet er sich sowohl für süße als auch für herzhafte Gebäcke.

Man unterscheidet Blätterteige nach der Art, nach der die Butter bzw. das Fett eingearbeitet wird:
*Deutscher Blätterteig:* hierbei liegen die Fettschichten innen, der Grundteig umschließt ihn (enthält nach den Leitsätzen für Feine Backwaren des deutschen Lebensmittelbuches mindestens 62 Kilogramm Butter, Milchfetterzeugnisse oder Margarine oder praktisch wasserfreie Fette, bezogen auf 100 Kilogramm Getreideerzeugnisse);
*Französischer Blätterteig:* hier umschließen die Fettschichten den Grundteig. Der Vorteil besteht darin, dass der Teig nicht austrocknen oder verkrusten kann, weil die Fettschicht außen liegt;
*Holländischer Blätterteig:* hier das Fett wird würfelförmig (kühl) in den Teig gearbeitet, ohne Ruhepausen touriert (daher auch: *Blitzblätterteig* genannt) und vor allem zu Blätterteigböden verarbeitet, da er nicht so gut aufgeht (hochzieht).

Backen portioniert. Holländischer Blätterteig nimmt durch seine kompakte Struktur eine Sonderstellung ein, denn das Gebäck kann nach dem Backen geschnitten werden. Durch diese Kompaktheit sind die Teige für spezielle Gebäcke, wie Prasselkuchen, Tortenböden, Tortendecken, gut geeignet.

Der Unterschied zwischen Blätterteig und anderen tourierten Gebäcken wie Plunder oder auch Croissants liegt vor allem im Teig. Dem Blätterteig wird keine Hefe zugegeben, im Plunder kommt zusätzlich Hefe als Triebmittel zum Einsatz. Außerdem enthalten die Teige, je nach Bedarf und Rezept, Zucker, Milch und weitere Zutaten. Der in der türkischen, griechischen und arabischen Küche verbreitete ebenfalls tourierte Yufka-, Fyllo- oder Masoukateig ist dem Blätterteig sehr ähnlich. Es sind auch Abwandlungen mit Öl oder Hefe bekannt.

Wichtig ist, dass das fertige Gebäck einerseits nicht unmittelbar nach Butter oder Fett schmeckt, andererseits aber einen buttrigen Gesamteindruck - sowohl optisch wie geschmacklich - hinterlässt, da dies von Verbrauchern als Qualitätsmerkmal angesehen wird.

Das Marktsegment, in dem Blätterteigbackwaren beheimatet sind, ist sehr homogen und lässt kaum Produktvielfalt zu. Über den Verkaufserfolg entscheiden allein Qualität und Preis. Dabei besteht seitens der Verbraucher sehr wohl Interesse an solchen Backwaren, die über zusätzliche sensorische oder geschmackliche Eigenschaften verfügen. Diese sind jedoch in der Auswahl übersichtlich: in der Regel handelt es sich um Croissants oder ähnliches, denen man nachträglich einen Kern aus Schokoladencreme oder Marmelade injiziert hat. Ursächlich ist hier, dass die Herstellung der Produkte praktisch ausschließlich maschinell erfolgt, da es einer millimetergenauen Ausrichtung der Ausrollwalzen bedarf, um einen homogenen Teig und nach dem Abbacken auch ein qualitativ hochwertiges Produkt herzustellen. Für diese Abläufe eignet sich das Einarbeiten weiterer Zutaten, die auch noch den Backprozess überstehen müssen, nur sehr bedingt, wenn überhaupt.

Einen großen Einfluss auf die sensorische Qualität der Blätterteigwaren haben die Natur und natürlich auch die Menge der eingesetzten Butter. Übliche Industriebutter wird durch Rahmreifung - also eine Abfolge von Erwärmen und Abkühlen des Rahms zur Ausbildung einer semi-kristallinen plastischen Masse - und nachfolgender klassischen Verbutterung hergestellt und weist eine Härte von etwa 1 N auf, was zu gering ist, um den Backwaren ausreichend Biss zu verleihen. Stattdessen werden die Produkte vom Verbraucher oftmals als ölig und schlapp empfunden. Industriell wirkt man dem derzeit in der Regel entgegen, dass man spezielle Buttergemische einsetzt, die jedoch in der Herstellung aufwendig sind und daher das Endprodukt nicht unerheblich verteuern JP2007060913 zeigt ein Verfahren zur Herstellung einer Wasser in Öl Emulsion für die Herstellung von Blätterteig, wie z.B. Croissant, wobei Butter mit wasserfreiem Milchfett versetzt wird und unter Scherung gekühlt wird.

WO 2006/011331 offenbart ein Verfahren zur Herstellung von Butter für die Herstellung von Blätterteig, wobei Butter mit Palmfett versetzt und vermischt wird, und in einem Kombinator, unter Scherung gekühlt wird.

### AUFGABE DER ERFINDUNG

Eine erste Aufgabe der vorliegenden Erfindung hat daher darin bestanden, ein Verfahren zur Herstellung einer Industriebutter zur Verfügung zu stellen, die eine Härte im Bereich von 1,5 bis 4,5 N aufweist und keine Tendenz zeigt, auszuölen.

Eine zweite Aufgabe ist darin zu sehen, die Butter mit möglichst geringem technischem Aufwand herzustellen und dabei insbesondere auf die viel Zeit beanspruchende Reifung mit nachfolgender Verbutterung zu verzichten.

### BESCHREIBUNG DER ERFINDUNG

Der Gegenstand der Erfindung betrifft ein Verfahren zur Herstellung einer Industriebutter umfassend oder bestehend aus den folgenden Schritten:
(i) Auftrennen von Rohmilch in eine Magermilch- und eine Rahmfraktion;
(ii) Auftrennen der Rahmfraktion aus Schritt (i) unter Zugabe von Wasser in eine Milchphase und eine wässrige Eiweiß-Lactose-Phase, die mehr als 90 Gew.-% der im Rahm enthaltenen Proteine sowie der Lactose enthält;
(iii) Versetzen der Milchphase aus Schritt (ii) wasserfreiem Milchfett (AMF) oder anderen harten Milchfetten in einer Menge von 2 bis 25 Gew.-% und nachfolgender Homogenisierung;
(iv) Kühlen der homogenisierten Masse unter Scherung, in dem die homogenisierte Masse aus Schritt (iii) einer Kühlung in mindestens zwei in Reihe geschalteten Schabewärmeaustauschern unterworfen wird;
(v) Formen der so gewonnenen gehärteten Industriebutter.

Überraschenderweise wurde gefunden, dass sich auf diese Weise nicht nur eine Industriebutter mit einer Härte im gewünschten Bereich erhalten lässt, sondern sowohl die Reifung als auch die Verbutterung als zeit-, energie- und kostaufwendige Schritte eingespart werden können.

### Rohmilch Separation

Die Butterherstellung geht üblicherweise von einer Rahmfraktion aus, die durch Separation bei der Gewinnung von Magermilch aus Roh- bzw. Vollmilch gewonnen wird. Diese Rahmfraktion weist typisch einen Fettgehalt von etwa 40 Gew.-% und kann falls erforderlich durch Standardisierung, d.h. Zugabe von fremdem Rahm auf diesen Wert eingestellt werden.

### Eiweiß-Lactose-Abtrennung

Der Rahm wird pasteurisiert bzw. sterilisiert und anschließend mit Wasser behandelt, beispielsweise in einem Separator. Dies kann bei Raumtemperatur, aber auch in der Kälte (z.B. 8 bis 12 °C) oder in der Wärme (z.B. etwa 35 bis etwa 85 °C und vorzugsweise etwa 45 bis etwa 65 °C) erfolgen. Auf diese Weise wird eine wässrige Phase erzeugt, die mehr als 90 Gew.-% der im Rahm enthaltenen Proteine sowie der Lactose enthalten. Zurück bleibt eine Milchphase, die weiterverarbeitet wird.

### Hartfettzugabe

Durch Versetzen der Milchphase mit Hartfett werden zwei Effekte erreicht: zum einen wird der Fettgehalt angehoben, so dass eine Butterung nicht mehr erforderlich wird, gleichzeitig wird ein Produkt erhalten, welches eine höhere Härte und geringere Tendenz zum Ausölen als konventionelle Industriebutter (typisch 1 bis 2 N) aufweist und damit in besonderer Weise geeignet ist, Backwaren vom Croissant-Typ herzustellen.

Die Zugabe des Hartfetts kann in einem konventionellen Rühr- oder Knetwerk erfolgen, bei Raumtemperatur oder auch erhöhter Temperatur bei etwa 25 bis 25 °C, solange das Fett nicht beginnt aufzuschmelzen. Die Zusatzmenge beträgt 2 bis 25 Gew.-% und insbesondere etwa 3 bis etwa 15 Gew.-%.

Der Milchphase wird so genanntes "Entwässertes Milchfett" (Anhydrous Milk Fat, AMF) oder andere harte Milchfettfraktionen zugesetzt. AMF liegt oberhalb von 36 °C flüssig und unterhalb von 18 °C fest vor, weshalb es zumindest im Rahmen der vorliegenden Erfindung ebenfalls als Hartfett bezeichnet wird. Per Definition handelt es sich hierbei um eine ausschließlich auf Basis von Milch gewonnene Fettphase, die völlig von Wasser und flüssigen Nicht-Fettprodukten befreit ist. Die Herstellung von AMF kann nach unterschiedlichen verfahren erfolgen. Typisch geht man von 40 %-igen Rahm auf, der in zwei Schritten auf einen Fettgehalt von 75 Gew.-% konzentriert wird. Es folgt eine Phaseninversion in einem Homogenisator, bei der eine Art Buttermilch sowie Butteröl erhalten werden. Letzteres wird dann im Vakuum behandelt, wobei als Endprodukt AMF anfällt.

Neben den Hartfetten können an dieser Stelle zur Aromabildung auch Butterkulturen zugegeben werden bzw. eine Säuerung erfolgen.

### Kombinatorbehandlung

Die nach Zugabe des Hartfetts bzw. des AMF homogenisierte plastische Masse wird unter Scherung gekühlt. Hierzu werden mindestens zwei, vorzugsweise 4 bis 5 in Reihe geschaltete Schabewärmeaustauscher, die auch in dieser Anordnung als "Kombinator" bezeichnet werden, verwendet.

Bei einem solchen Bauteil wird das zu kühlende Produkt in das untere Ende des vertikalen Wärmetauschers gepumpt und fließt durch den Zylinder. Es wird permanent gerührt und durch Schaber von der Zylinderwand entfernt. Heiz- oder Kühlmedien strömen in dem ringförmigen Spalt zwischen dem Wärmetauschzylinder und der isolierten Ummantelung.

Auf diese Weise wird am Ende des Austauschers als Produkt eine Industriebutter mit einer Temperatur von etwa 10 °C abgenommen, die eine Härte im Bereich von etwa 1,5 bis etwa 4,5 N und insbesondere etwa 2 bis etwa 4 N aufweist und nun beispielsweise zu Barren geformt und abgepackt werden kann.

### BEISPIELE

### Vergleichsbeispiel V1

### Herstellen einer Industriebutter mit Hartfett

500 kg Rahm mit einem Fettgehalt von 40 Gew.-% wurden in einem Separator gegeben und mit 500 Kg Wasser gewaschen. Es wurden 750 kg einer wässrigen Phase erhalten, welche 2,1 Gew.-% Eiweiß und 2,9 Gew.-% Lactose enthielt und getrennt weiter verarbeitet wurde. Die zurückgebliebene Milchphase wurde in einen Rührkessel mit Knetwerk überführt und dort portionsweise mit 25 kg Palmfett versetzt. Die Mischung wurde auf 35 °C erwärmt und solange geknetet, bis eine homogene plastische Masse entstand. Die Masse wurde kontinuierlich auf einen Kombinator bestehend aus 4 in Reihe geschaltete Schabewärmeaustauscher vom Typ SPX (GERSTENBECK-SCHRÖDER) gegeben. Der Kombinator wies vier Kühlzonen auf, nämlich 27 °C / 18°C / 11°C / 14°C und wurde bei einem Druck von 17,3 bar betrieben. Es wurde eine Industriebutter mit einer Temperatur von 6 °C erhalten, die eine Härte nach dem Auskristallisieren von 2,7 N aufwies.

### BEISPIEL 1

### Herstellen einer Industriebutter mit AMF

500 kg Rahm mit einem Fettgehalt von 40 Gew.-% wurden in einem Separator gegeben und mit 500 Kg Wasser gewaschen. Es wurden 750 kg einer wässrigen Phase erhalten, welche 2,0 Gew.-% Eiweiß und 2,8 Gew.-% Lactose enthielt und getrennt weiter verarbeitet wurde. Die zurückgebliebene Milchphase wurde in einen Rührkessel mit Knetwerk überführt und dort portionsweise mit 15 kg AMF versetzt. Die Mischung wurde bei Raumtemperatur solange geknetet, bis eine homogene plastische Masse entstand. Die Masse wurde kontinuierlich auf einen Kombinator bestehend aus 4 in Reihe geschaltete Schabewärmeaustauscher vom Typ SPX (GERSTENBECK-SCHRÖDER) gegeben. Der Kombinator wies vier Kühlzonen auf, nämlich 19°C / 15°C / 9°C / 12 °C und wurde bei einem Druck von 18,3 bar betrieben. Es wurde eine Industriebutter mit einer Temperatur von 6 °C erhalten, die eine Härte nach dem Auskristallisieren von 1,65 N aufwies.

## Patentansprüche

1. Verfahren zur Herstellung einer Industriebutter umfassend oder bestehend aus den folgenden Schritten:
(i) Auftrennen von Rohmilch in eine Magermilch- und eine Rahmfraktion;
(ii) Auftrennen der Rahmfraktion aus Schritt (i) unter Zugabe von Wasser in eine Milchphase und eine wässrige Eiweiß-Lactose-Phase, die mehr als 90 Gew.-% der im Rahm enthaltenen Proteine sowie der Lactose enthält;
(iii) Versetzen der Milchphase aus Schritt (ii) mit wasserfreiem Milchfett (AMF) oder anderen harten Milchfetten in einer Menge von 2 bis 25 Gew.-% und nachfolgender Homogenisierung;
(iv) Kühlen der homogenisierten Masse unter Scherung, indem die homogenisierte Masse aus Schritt (iii) einer Kühlung in mindestens zwei in Reihe geschalteten Schabewärmeaustauschern unterworfen wird;
(v) Formen der so gewonnenen gehärteten Industriebutter.

2. Verfahren nach Anspruch 1, **dadurch gekennzeichnet, dass** man Rahm einsetzt, der einen Fettgehalt von mindestens 30 Gew.-% aufweist.

## Claims

1. A process for the preparation of an industrial butter comprising or consisting of the following steps:
(i) separating raw milk into a skimmed milk fraction and a cream fraction;
(ii) while adding water, separating the cream fraction of step (i) into a milk phase and an aqueous protein-lactose phase, which contains more than 90% by weight of the proteins contained in the cream and the lactose;
(iii) adding anhydrous milk fat (AMF) or other hard milk fat to the milk phase of step (ii) in an amount of 2 to 25% by weight and subsequent homogenisation;
(iv) cooling the homogenised mass while shearing subjecting the homogenised mass of step (iii) to cooling within at least two serially connected scraped surface heat exchangers;
(v) shaping the hardened industrial butter thus obtained.

2. Process according to claim 1, **characterised in that** cream is used which has a fat content of at least 30% by weight.

## Revendications

1. Un procédé de préparation d'un beurre industriel comprenant ou consistant en les étapes suivantes :
(i) la séparation du lait cru en une fraction de lait écrémé et une fraction de crème;
(ii) la séparation de la fraction de crème de l'étape (a) avec addition d'eau en une phase de lait et une phase aqueuse de protéines-lactose contenant plus de 90% en poids des protéines contenues dans la crème ainsi que le lactose;
(iii) l'addition de matière grasse laitière anhydre (AMF) ou d'autres matières grasses laitières dures en une quantité de 2 à 25% en poids à la phase de lait de l'étape (b), suivie d'une homogénéisation ;
(iv) refroidir la masse homogénéisée sous cisaillement en soumettant la masse homogénéisée de l'étape (iii) à un refroidissement dans au moins deux échangeurs de chaleur raclés connectés en série ;
(v) le moulage du beurre industriel durci ainsi obtenu.

2. Procédé selon la revendication 1, **caractérisé en ce que** l'on utilise de la crème qui a une teneur en matières grasses d'au moins 30% en poids.
